# FASCICULE DE BREVET EUROPEEN

(11) **EP 1 855 608 B1**
(45) Date de publication et mention de la délivrance du brevet: **30.11.2011**
(21) Numéro de dépôt: 05823059.0
(22) Date de dépôt: 28.11.2005
(51) Int. Cl.: A61C 1/16, A61C 19/02, A61C 3/03

(54) **DISPOSITIF DE PROTECTION DE TETE DE PIECE A MAIN DE DENTISTERIE ET CONDITIONNEMENT ETANCHE POUR INSERT EQUIPE DUDIT DISPOSITIF**
VORRICHTUNG ZUM SCHUTZ DES KOPFES EINES DENTALHANDSTÜCKS UND VERSCHLOSSENE VERPACKUNG FÜR EINEN MIT DIESER VORRICHTUNG AUSGESTATTETEN EINSATZ
DEVICE FOR PROTECTING THE HEAD OF A DENTAL HANDPIECE AND SEALED PACKAGING FOR AN INSERT EQUIPPED WITH SAID DEVICE

(30) Priorité: 24.02.2005 FR 0501863
(43) Date de publication de la demande: 21.11.2007
(73) Titulaire: MICRO MEGA INTERNATIONAL MANUFACTURES, 25000 Besançon (FR)
(72) Inventeur: EUVRARD, Hubert, F-25000 BESANCON (FR); OUHAYOUN, Jean-Pierre, F-75007 PARIS (FR)
(74) Mandataire: Poupon, Michel
(86) Numéro de dépôt international: PCT/FR2005/002945
(87) Numéro de publication internationale: WO 2006/090021

(56) Documents cités:
- US-A- 4 723 912
- US-A1- 2003 162 145

## Description

La présente invention concerne un dispositif de protection de tête de pièce à main de dentisterie.

Le document US-A-4 723 912 concerne un emballage avec une manchette extensible pour des instruments dentaires longues.

Un objectif de l'invention est de proposer un dispositif de protection peu onéreux et simple d'utilisation de la pièce à main ou du contre-angle pendant le travail en bouche.

Un autre objectif de l'invention est de concevoir un emballage stérile pour un insert de pièce à main droite ou de contre-angle qui, d'une part permette de proposer au dentiste des inserts stérilisés et éventuellement à usage unique et d'autre part serve à la mise en place de l'insert qu'elle contient, en toute sécurité, sur la pièce à main ou le contre-angle.

Par insert, on désignera dans la suite du texte un ensemble formé d'une tête porte-outil, et d'un outil de parodontologie par exemple monté sur celle-ci, cet ensemble étant adaptable par vissage, encliquetage ou autre, sur une pièce à main ou un contre-angle.

Ces objectifs sont atteints par l'invention qui consiste en un dispositif de protection pour appareil de dentisterie, du type composé principalement d'une pièce à main droite ou d'un contre-angle, formés d'un corps enfermant une motorisation et/ou des organes de transmission de mouvement et d'une tête porte-outil portant un outil, caractérisé en ce que le dispositif de protection est une manchette, présentant la forme générale d'un doigt de gant avec une ouverture à une extrémité et un fond fermé à l'autre extrémité.

Préférentiellement, la manchette est réalisée en matériau souple enroulable sur lui-même, ou la manchette est réalisée en matériau pliable en accordéon.

Préférentiellement, en position initiale la manchette est compactée ou enroulée extérieurement sur elle-même, et apte à être placée sur l'extrémité distale de la tête porte-outil, son fond fermé étant traversé par l'outil, et en position d'utilisation la manchette est déployée ou déroulée sur la tête et sur une partie au moins du corps de la pièce à main ou du contre-angle.

L'invention porte également sur un ensemble consommable pour appareil de dentisterie, composé d'un insert et de son conditionnement étanche, ledit conditionnement étant formé d'un emballage avec une enveloppe de forme générale tubulaire, cette enveloppe étant dimensionnée et ouverte à une extrémité pour permettre d'introduire un insert équipé d'une manchette de protection selon l'invention.

De façon préférentielle, la tête de l'insert présente à son extrémité distale une dépression annulaire terminée par un épanouissement annulaire servant au positionnement d'un bourrelet formé par la manchette enroulée ou compactée.

En outre, le diamètre externe du bourrelet de la manchette enroulée ou compactée, est tel que ledit bourrelet vient en contact avec la paroi interne de l'enveloppe ou avec les fonds des cannelures de ladite enveloppe si celle ci en comporte, de façon à ce que la manchette compactée assure la transmission des efforts de mise en place de l'insert ou de l'outil sur l'appareil. La transmission d'efforts est réalisée par la friction entre le matériau de la manchette et celui du conditionnement, cette friction pouvant être augmentée par des formes et/ou états de surfaces.

De façon préférentielle, le conditionnement se caractérise par une enveloppe fermée, sur son côté opposé à celui qui comporte la collerette par un fond plat et par au moins un étui plat et creux dont la cavité intérieure peut accueillir l'outil.

On comprendra mieux l'invention à l'aide de la description ci-après faite en référence aux figures annexées suivantes :
- Figure 1 : vue générale d'une pièce à main droite sur laquelle est monté un insert à cuvette coudée, et citée à titre d'exemple d'application possible de l'invention.
- Figure 2 : vue générale de la pièce à main et de l'insert de la figure 1, montrant une manchette de protection selon l'invention en position initiale enroulée.
- Figure 3 : vue générale de la pièce à main et de l'insert de la figure 1 avec manchette de protection déroulée totalement.
- Figure 4 : vue générale d'une variante de conditionnement selon l'invention.
- Figure 5 : vue générale d'une autre variante de conditionnement selon l'invention.
- Figures 6 et 7 : vue de face et vue en coupe longitudinale selon BB de la variante de conditionnement de la figure 5.

A titre d'exemple d'application de l'invention, les figures montrent un insert jetable (19), formé d'une tête (1) portant une curette coudée (2), monté sur une pièce à main droite (3).

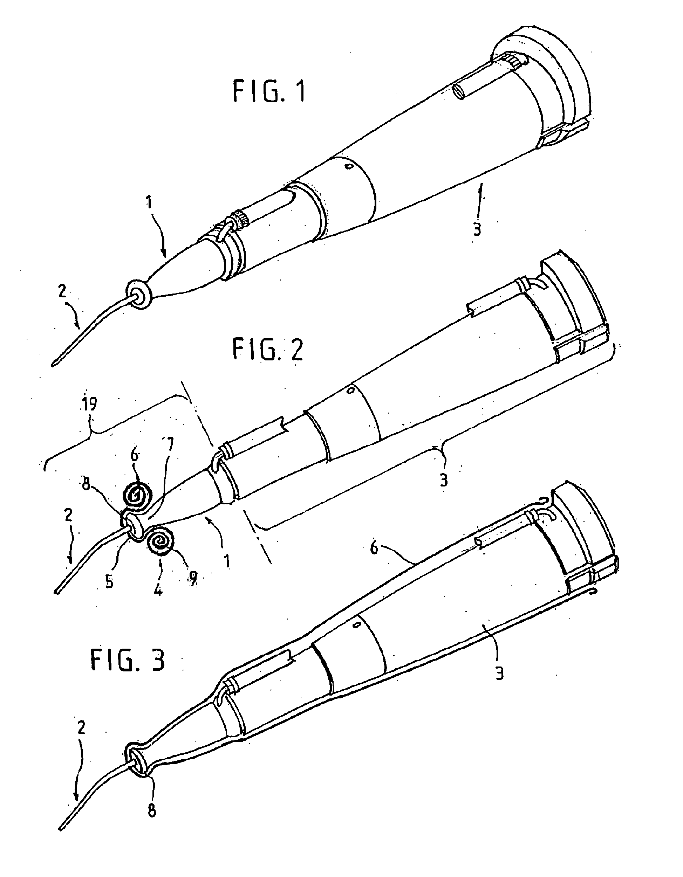

Les figures 2 et 3 montrent le principe d'utilisation d'une manchette de protection (4) selon l'invention, réalisée en matériau souple et enroulable, par exemple du latex, dont la forme générale est celle d'un doigt de gant, avec une ouverture (6) à une extrémité, et un fond fermé (5) à l'autre extrémité.

En position initiale (figure 2), la manchette est enroulée extérieurement sur elle-même, placée sur l'extrémité distale de la tête porte-outil, et son fond fermé (5) est traversé par l'outil (2).

Pour faciliter le maintient de la manchette enroulée, la tête (1) présente de préférence à son extrémité distale une dépression annulaire (7) terminée par un épanouissement annulaire (8) servant au positionnement du bourrelet (9) formé par la manchette enroulée.

Pour protéger l'ensemble de l'appareil pendant le travail de parodontologie, il suffit de dérouler la manchette sur la tête et le corps de celui-ci comme le montre la figure 3. De préférence, la manchette déroulée couvre l'appareil sur toute la longueur, et elle est maintenue sur celui-ci par l'élasticité du matériau.

Selon des variantes de réalisation non représentées, on peut proposer des manchettes en d'autres matériaux avec des modes de déploiement-compactage différents, comme par exemple une manchette pliée en accordéon dans sa forme compactée initiale, et dépliable le long de l'appareil.

La manchette de protection, selon l'invention, peut être livrée individuellement et mise en place, sous sa forme compactée initiale, par le dentiste sur tout type d'appareil de dentisterie, puis elle est développée ou déployée le long dudit appareil pour le recouvrir au moins en partie, et au moins sur la zone de jonction entre la tête et le corps de l'appareil.

De façon préférentielle, cette manchette de protection est compactée dans sa forme initiale, et mise en place sur la tête d'un insert, éventuellement jetable, l'ensemble étant conditionné et stérilisé dans un emballage (10) fermé de façon étanche par un opercule (11).

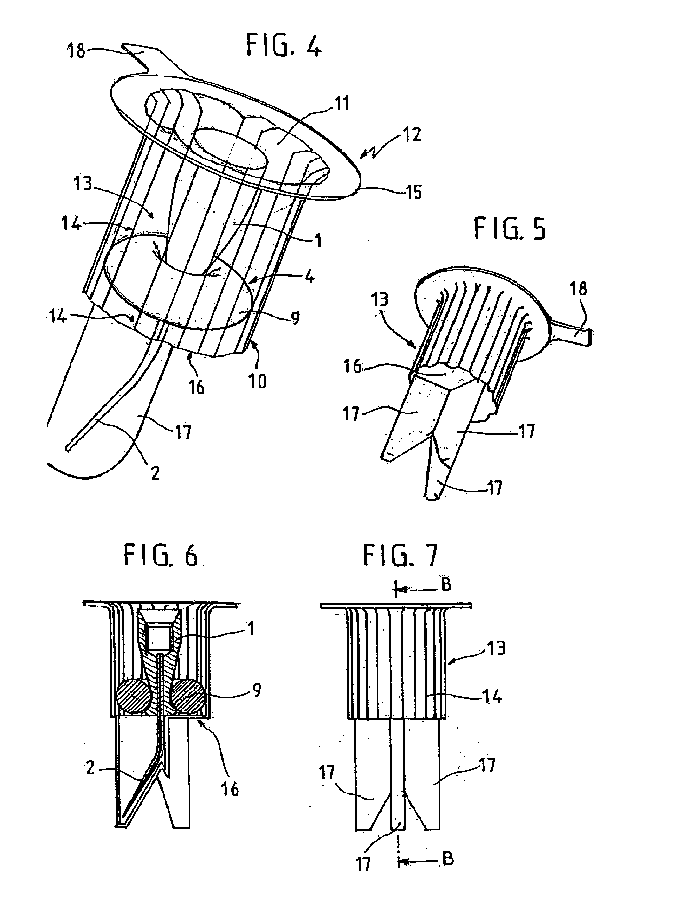

L'exemple de conditionnement (12) de la figure 4 est formé d'un emballage (10), préférentiellement en matière transparente, formé d'une enveloppe de forme générale tubulaire (13) portant des cannelures longitudinales (14), facilitant la prise en main, cette enveloppe étant dimensionnée et ouverte à une extrémité pour permettre d'y introduire un insert équipé d'une manchette de protection compactée en position initiale, ladite extrémité étant bordée par une collerette plate (15) servant à la soudure d'un opercule (11) de fermeture de l'enveloppe cylindrique (13) ; ladite enveloppe étant par ailleurs fermée à son autre extrémité d'une part par un fond plat (16) et d'autre part par un étui plat et creux (17), conformé de façon à recevoir la curette, ou tout autre outil (2) de l'insert.

De façon classique, l'opercule (11) comporte une languette (18) de préhension à saisir en vue d'arracher ledit opercule.

Selon une variante de réalisation représentée sur les figures 5 à 7, l'enveloppe (13) est prolongée par trois étuis (17) disposées radialement à 60° et servant de pieds pour poser le conditionnement verticalement avec l'opercule en haut. Ils peuvent également aider à la préhension et/ou à la rotation du conditionnement pour visser ou engager l'insert sur le contre-angle ou la pièce à main.

De façon préférentielle, le diamètre externe du bourrelet (9) de la manchette enroulée ou compactée, est tel que ledit bourrelet vient en contact avec la paroi interne de l'enveloppe (13) ou avec les fonds des cannelures de ladite enveloppe si celle ci en comporte, de façon à ce que la manchette compactée assure la transmission des efforts de mise en place de l'insert ou de l'outil sur l'appareil. Cette transmission d'efforts est réalisée par la friction entre le matériau de la manchette et celui du conditionnement, cette friction pouvant être augmentée par des formes et/ou états de surfaces.

La forme de l'emballage qui vient d'être décrite convient à un insert portant un outil coudé, et adaptable à une pièce à main droite.

Bien entendu, le principe du conditionnement selon l'invention est transposable à des inserts à outil droit pour contre-angle, en modifiant la forme de l'emballage.

Dans tous les cas, les conditionnements contenant différents types d'outils sont livrés stérilisés au dentiste. Celui-ci choisit l'outil dont il a besoin, déchire l'opercule d'une main en maintenant l'emballage de l'autre main, puis visse ou encliquette l'insert sur l'appareil sans le toucher. La manipulation s'effectue donc sans risque de contamination de l'outil et sans risque de blessure pour le dentiste.

## Revendications

1. Ensemble consommable pour appareil de dentisterie, du type composé principalement d'une pièce à main droite (3) ou d'un contre-angle, formés d'un corps enfermant une motorisation et/ou des organes de transmission de mouvement d'une tête porte-outil (1) portant un outil (2), l'ensemble consommable étant composé d'un insert (19) et de son conditionnement étanche (12), ledit conditionnement étant formé d'un emballage (10) avec une enveloppe de forme générale tubulaire (13), cette enveloppe étant dimensionnée et ouverte à une extrémité (15) pour permettre d'introduire l'insert équipé sur son extrémité distale d'une manchette de protection (4) compactée ou enroulée extérieurement sur elle-même avec un fond fermé (5) traversé par un outil de l'insert ladite extrémité de l'enveloppe étant bordée par une collerette plate (15) servant à la soudure d'un opercule (11).

2. Ensemble selon la revendication 1, **caractérisé en ce que** la tête (1) de l'insert présente à son extrémité distale une dépression annulaire (7) terminée par un épanouissement annulaire (8) servant au positionnement d'un bourrelet (9) formé par la manchette enroulée ou compactée.

3. Ensemble selon l'une des revendications 1 à 2, **caractérisé en ce que**, le diamètre externe du bourrelet (9) de la manchette enroulée ou compactée, est tel que ledit bourrelet vient en contact avec la paroi interne de l'enveloppe (13) ou avec les fonds des cannelures de ladite enveloppe si celle-ci en comporte, de façon à ce que la manchette compactée assure la transmission des efforts de mise en place de l'insert ou de l'outil sur l'appareil.

4. Ensemble selon la revendication 3, **caractérisé en ce que** la transmission d'efforts est réalisée par la friction entre le matériau de la manchette et celui du conditionnement, cette friction pouvant être augmentée par des formes et/ou états de surfaces.

5. Ensemble selon l'une des revendications 1 à 4, **caractérisé en ce que** la manchette est réalisée en matériau souple enroulable sur lui-même.

6. Ensemble selon l'une des revendications 1 à 4, **caractérisé en ce que** la manchette est réalisée en matériau pliable en accordéon.

7. Ensemble selon l'une des revendications 1 à 6, **caractérisé en ce que** la manchette est en latex.

8. Ensemble consommable selon l'une des revendications 1 à 7, **caractérisé en ce que** l'enveloppe du conditionnement est fermée, sur son côté opposé à celui qui comporte la collerette (15) par un fond plat (16) et par au moins un étui plat et creux (17) dont la cavité intérieure peut accueillir l'outil (2).

## Claims

1. Disposable assembly for a piece of dental equipment of the type comprising principally a straight hand piece (3) or a contra-angle, formed by a body enclosing a motor unit and/or elements for the transmission of movement of a tool-holder head (1) supporting a tool (2), the disposable assembly comprising an insert (19) and its sealed packaging (12), said packaging being comprised of packing (10) with a casing which has a generally tubular shape (13), said casing being dimensioned and open at one end (15), to allow the introduction of an insert equipped at its distal end with a protective sleeve (4), which is compacted or wrapped externally on itself with a closed base (5) traversed by a tool of the insert, said end of the casing being bordered by a flat collar (15) used for the welding of a cover (11).

2. Assembly according to claim 1, **characterised in that** the head (1) of the insert has at its distal end an annular depression (7) terminated by an annular bulge (8) used for the positioning of a beading (9) formed by the wrapped or compacted sleeve.

3. Assembly according to either of claims 1 to 2, **characterised in that** the external diameter of the beading (9) of the wrapped or compacted sleeve is such that the said beading comes into contact with the internal wall of the casing (13) or with the bases of the grooves of said casing, if said casing comprises such grooves, such that the compacted sleeve ensures the transmission of forces of engagement of the insert or tool on the piece of equipment.

4. Assembly according to claim 3, **characterised in that** the forces are transmitted by friction between the material of the sleeve and the packaging, said friction being able to be increased by surface shapes and/or surface states.

5. Assembly according to any one of claims 1 to 4, **characterised in that** the sleeve is made of flexible material which can be wrapped around itself.

6. Assembly according to any one of claims 1 to 4, **characterised in that** the sleeve is made from a material which can be folded concertina-like

7. Assembly according to any one of claims 1 to 6, **characterised in that** the sleeve is made of latex.

8. Disposable assembly according to any one of claims 1 to 7, **characterised in that** the casing of the packaging is closed, at the end opposite to the one which comprises the collar (15), by a flat base (16) and by at least one flat and hollow case (17) the inner cavity of which can receive the tool (2).

## Patentansprüche

1. Verbrauchseinheit für ein zahnärztliches Gerät, das im Wesentlichen aus einem geraden Handstück (3) oder aus einem Winkelstück gebildet ist, das durch einen Körper gebildet ist, der eine Motorisierung und/oder Bewegungsübertragungsorgane für einen Werkzeugträgerkopf (1) umschließt, welcher ein Werkzeug (2) trägt, wobei die Verbrauchseinheit durch einen Einsatz (19) und dessen dichte Verpackung (12) gebildet ist, wobei die Verpackung durch eine Umhüllung (10) mit einer Hülle (13) mit einer im Wesentlichen röhrenartigen Gestalt gebildet ist, wobei die Hülle spezifisch dimensioniert und an einem Ende (15) offen ist, um das Einführen des Einsatzes zu gestatten, der an seinem distalen Ende mit einer Schutzmanschette, die komprimiert oder außenseitig um sich selbst eingerollt ist, mit einem geschlossenen Boden (5) ausgestattet ist, der von einem Werkzeugeinsatz durchtreten ist, wobei das Ende der Hülle durch einen flachen Kragen (15) begrenzt ist, der zum Verschweißen eines Verschlusses (11) dient.

2. Einheit nach Anspruch 1, **dadurch gekennzeichnet, dass** der Kopf (1) des Einsatzes an seinem distalen Ende eine ringartige Vertiefung (1) aufweist, die durch eine ringartige Aufweitung (8) abgeschlossen ist, die zum Positionieren einer Wulst (9) dient, die durch die eingerollte oder komprimierte Manschette gebildet ist.

3. Einheit nach einem der Ansprüche 1 bis 2, **dadurch gekennzeichnet, dass** der Außendurchmesser der Wulst (9) der eingerollten oder komprimierten Manschette so eingerichtet ist, dass die Wulst in Kontakt mit der Innenwand der Hülle (13) oder mit den Bodenseiten der Längsrillen, falls vorhanden, der Hülle kommt, so dass die komprimierte Manschette die Kräfteübertragung beim Anordnen des Einsatzes oder des Werkzeuges in den Apparat gewährleistet.

4. Einheit nach Anspruch 3, **dadurch gekennzeichnet, dass** die Kräfteübertragung durch die Reibung zwischen dem Material der Manschette und dem der Verpackung erfolgt, wobei die Reibung durch die Ausgestaltungen und/oder Eigenschaften der Oberflächen erhöht werden kann.

5. Einheit nach einem der Ansprüche 1 bis 4, **dadurch gekennzeichnet, dass** die Manschette durch ein Material gebildet ist, das um sich einrollbar ist.

6. Einheit nach einem der Ansprüche 1 bis 4, **dadurch gekennzeichnet, dass** die Manschette durch ein Material gebildet ist, das ziehharmonikaartig faltbar ist.

7. Einheit nach einem der Ansprüche 1 bis 6, **dadurch gekennzeichnet, dass** die Manschette aus Latex ist.

8. Verbrauchseinheit nach einem der Ansprüche 1 bis 7, **dadurch gekennzeichnet, dass** die Verpackungshülle an der Seite, die den Kragen (15) trägt, durch einen flachen Boden (16) und durch wenigstens ein flaches sowie hohles Futteral (17) geschlossen ist, dessen innenseitiger Hohlraum das Werkzeug (2) aufnehmen kann.
